Europäisches Patentamt

European Patent Office

Office européen des brevets

(19)

(11) Publication number: **0 108 510**
**A1**

(12)

# EUROPEAN PATENT APPLICATION

(21) Application number: **83306107.0**

(22) Date of filing: **10.10.83**

(51) Int. Cl.³: **G 02 B 5/16**

(30) Priority: **22.10.82 GB 8230252**

(43) Date of publication of application:
**16.05.84 Bulletin 84/20**

(84) Designated Contracting States:
**DE FR IT**

(71) Applicant: **STANDARD TELEPHONES AND CABLES PUBLIC LIMITED COMPANY**
**190 Strand**
**London, WC2R 1DU(GB)**

(72) Inventor: **Jackson, Peter**
**11C Brook Lane**
**Warsash Southampton(GB)**

(74) Representative: **Laurence, Simon French**
**S.T.C. Patent Department Edinburgh Way**
**Harlow Essex CM20 2SH(GB)**

(54) Telecommunication cable manufacture.

(57) The transmission package 4 of an optical fibre submarine cable is placed between the jaws of a C-section aluminium extrusion 7 which is then closed around the package. Then an oversize seamless aluminium tube 10 is generated by continuous friction extrusion around the closed C-section tube and, after cooling, is drawn down on to it to form a high quality hermetic seal for the transmission package.

Fig.1.

EP 0 108 510 A1

## TELECOMMUNICATIONS CABLE MANUFACTURE

This invention relates to telecommunications cables, and in particular, though not exclusively, to optical fibre submarine cables.

The transmission package of an optical fibre cable typically consists of a number of glass optical fibres each having a silicone plastics primary coating and a thicker secondary coating of extruded plastics material. It is generally desirable to protect this package from mechanical strain, from the ingress of water, and in the case of submarine cable from substantial hydrostatic pressure as each one of these factors is liable to induce significantly enhanced optical attenuation in an optical fibre by opening microcracks in the glass. The ingress of water can also lead to a deterioration in the performance of a coaxial construction of metallic conductor cable by virtue of its absorption into the dielectric spacing the outer conductor from the inner.

One way of preventing the ingress of water is to encase the transmission package in a longitudinal wrapping of metallic tape whose sides are wrapped around the package, butted together, and welded with a continuous longitudinal weld.

One known construction of optical fibre cable for submarine use which adopts this technique has one or more optical fibres located within a tubular electrical conductor, over which there is a cylindrical strain member consisting, for instance, of one or more layers of

'stranded steel wires. Over the strain member is formed an electrically conductive tube consisting of longitudinally wrapped copper tape whose abutting edges have been welded together to provide hermeticity.

The tubular electrical conductor surrounding the optical fibres may consist of a friction extruded C-section aluminium extrusion whose jaws have been closed around the optical fibres to form a tube in the manner disclosed in United Kingdom Patent Specification No. 2105483A. To complete the cable construction a dielectric layer is extruded over the copper tube and further sheathing or armouring is applied, if required, depending upon the individual use for the cable. In this construction the closed C-section tube protects the fibre package from mechanical strain and hydrostatic pressure.

One of the particular problems associated with this design is that of achieving good hermeticity of the seal between the edges of the copper tape. The present invention is concerned with avoiding this problem by the use of a friction extruded seamless metal tube. The use of the continuous friction extrusion process also avoids the stop/start problems inherent in discontinuous extrusion processes, such as billet extrusion, and enables long lengths to be extruded with substantially constant properties.

According to the invention there is provided a method of manufacturing a telecommunications cable, which method includes the steps of introducing the transmission package of the cable between the jaws of a C-section metal extrusion, and of closing the jaws of the C-section extrusion around the package to form a tube, characterised in that said steps are succeeded by the steps of friction extruding as a loose fit tube a seamless metal tube around the closed C-section tube, of cooling the friction extruded tube, and of shrinking the friction extruded tube into intimate contact with the closed C-section tube.

The use of the closed C-section tube between the friction extruded seamless tube and the transmission package provides a barrier limiting the transfer of heat from the freshly extruded tube to the package. Conveniently the C-section extrusion is also made by friction extrusion. The seamless tube is not extruded directly on to the closed C-section tube, but is extruded as a loose fitting tube surrounding the closed C-section so that the C-section is not exposed to the full rigour of the high temperature, high pressure, environment encountered in the friction extrusion process. Exposure to this environment would cause distortion of the closed C-section tube and thereby damage the transmission package.

There follows a description of the method of cabling an optical fibre transmission package to make a submarine optical fibre cable embodying the invention in a preferred form. The description refers to the accompanying drawings in which

Figure 1    depicts schematically the apparatus used for making the cable, and

Figures 2 to 6 depict cross-sections of the cable in successive stages of its manufacture using the apparatus of Figure 1.

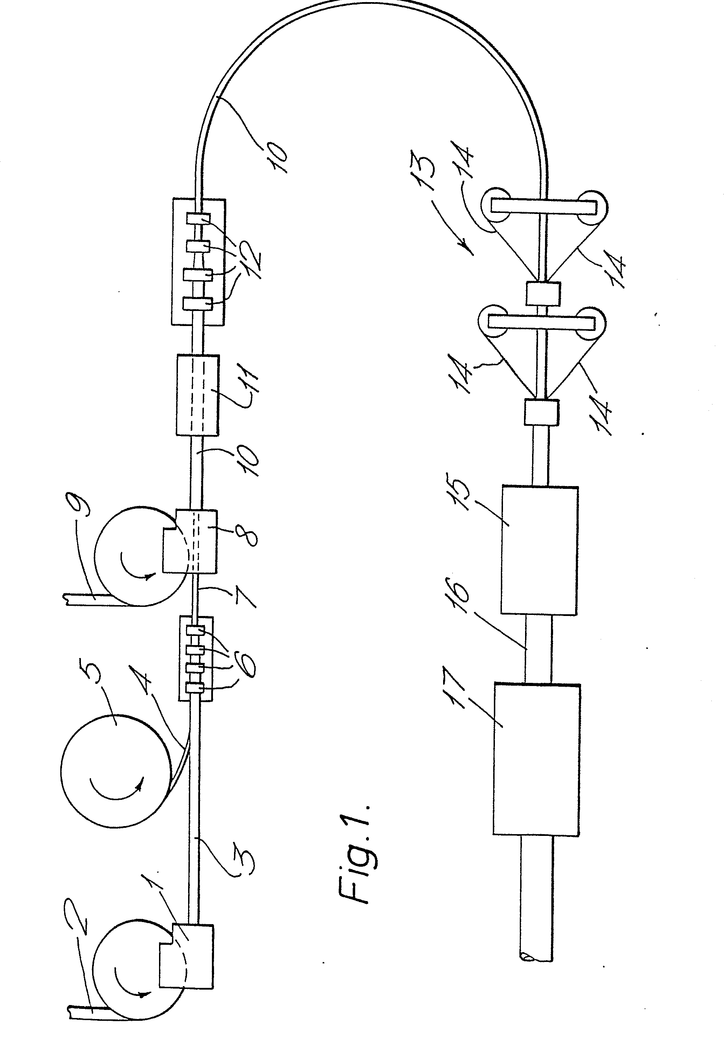

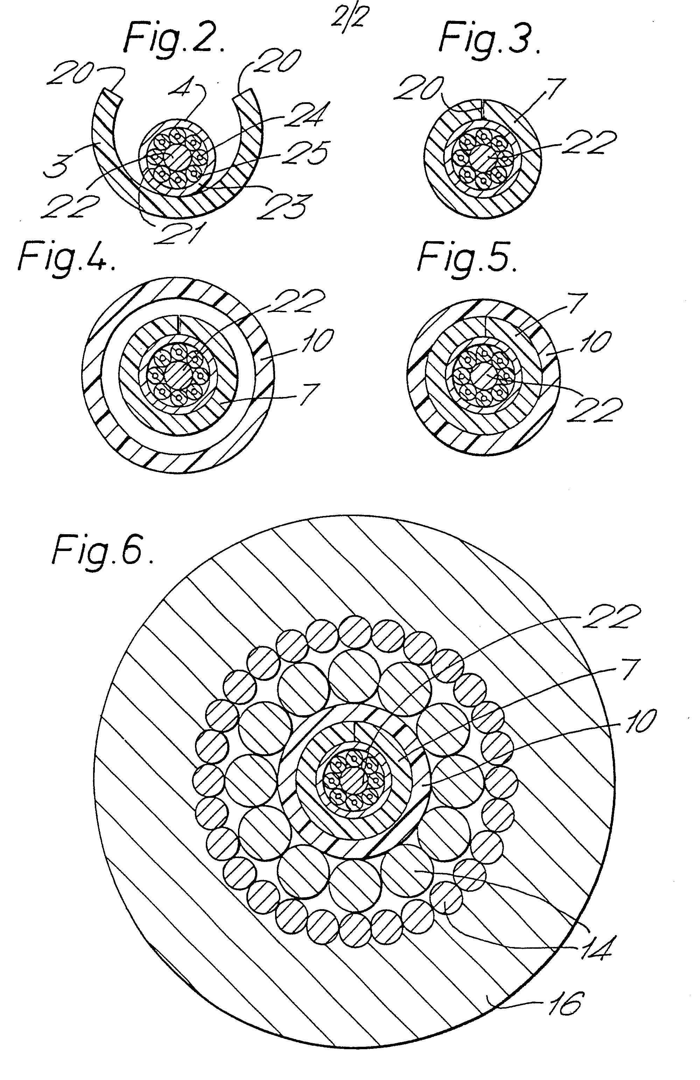

A friction extruder 1 is employed to produce from aluminium feed stock 2 a continuous C-section aluminium extrusion 3 whose opposing jaws 20 (Figure 2) are wide enough apart to allow the insertion between them of an optical fibre transmission package 4 dispensed from a paying off reel 5 (Figure 1). The freshly extruded C-section extrusion 3 is cooled and dried, by means not shown, before insertion of the transmission package so that the package shall not be damaged by exposure to temperatures approaching that generated in the extrusion process.

The transmission package is depicted in greater detail in Figure 2 and consists of a set of plastics packaged glass optical fibres 21 stranded around a king wire 22 and optionally held together as a bundle by means of a tape wrapping 23, for instance of polyester plastics material. Each fibre package 21 has at its core a glass fibre 24, typically made of silica, having an internal optical waveguiding structure. The glass core is surrounded by plastics material 25 provided in one or more layers to give a measure of protection for the underlying glass surface and to afford sufficient robustness for the stranding operation. In some cable constructions the king wire 22 may itself be a packaged optical fibre similar to or identical with the packaged optical fibres 21.

Once the transmission package 4 has been inserted inside the C-section extrusion 3, the assembly is passed through a set of dies 6, or of dies and rolls, to close the jaws together and form a tube 7 (Figure 3) completely enveloping the transmission package. This tube is then fed through the tooling of a further friction extruder 8. This extruder 8 is fed with stock 9 which the extruder forms into a loose fitting seamless tube 10 surrounding the closed C-section tube 6.

Hollow tooling is used for the extrusion of the seamless tube 10 in order that the closed C-section tube 7 shall not be deformed by the extruding process used to create the seamless tube. This means that the seamless tube 10 is initially extruded in an oversize form (Figure 4) which is not in contact with the tube 7, and therefore the tube 7 is not only protected from the high pressures involved in the seamless tube extrusion, but also receives a measure of protection from the attendant high temperature.

The seamless tube 10 is cooled in a water trough 11 immediately after emerging from the extruder 8. Back tension on the closed C-section tube 7 prevents it from coming to rest against the inner wall of the tube 10 until it has been sufficiently cooled. Next the tube 10 is passed through a series of dies 12 or of dies and rolls which shrink the tube 10 down into intimate contact with the tube 6 (Figure 5). Typically, having regard to such factors as work-hardening, the amount of draw-down produced by these dies 12 is limited to producing about a 25% decrease in the overall cross-sectional area of the tube 10.

The emergent seamless tube 10, now shrunk on to the closed tube 7 surrounding the transmission package 4, is then fed through a strander 13 which applies a strength member consisting of one or more layers of stranded steel wires 14 (Figure 6). Typically, though not necessarily, two layers are applied which are stranded with oppositely directed lays in order to provide a measure of torque balance, then the cable is passed through one or more extruders 15 which apply plastics sheathing 16 (Figure 6). Optionally the cable emerging from the extruder(s) 15 may be provided with armouring (not shown) from an armouring machine 17.

The foregoing description, together with Figure 1 show the successive elements of the cable-making processes as occurring in tandem. It will be appreciated that it may be more convenient or practical for the processes to be carried out individually or in smaller groups than shown. The invention is therefore not limited to a single integrated cable-making process, but is applicable also to such cable-making carried out in individual stages.

Although the foregoing specific description of a preferred embodiment of the invention has related exclusively to the manufacture of optical fibre cable for submarine use, it is to be clearly understood that the invention is not limited in its application solely to the manufacture of this particular type of cable, but is applicable also to the manufacture of cable for use on land and to telecommunications cable that is electrical rather optical or includes electrical transmission paths in association with optical ones.

0108510

CLAIMS :

1.    A method of manufacturing a telecommunications cable, which method includes the steps of introducing the transmission package of the cable between the jaws of a C-section metal extrusion, and of closing the jaws of the C-section extrusion around the package to form a tube, characterised in that said steps are succeeded by the steps of friction extruding as a loose fit tube a seamless metal tube around the closed C-section tube, of cooling the friction extruded tube, and of shrinking the friction extruded tube into intimate contact with the closed C-section tube.

2.    A telecommunications cable made by the method claimed in claim 1.

4.    A cable as claimed in claim 2, wherein the transmission package consists of or includes one or more optical fibres.

Fig.1.

Fig.2.

Fig.3.

Fig.4.

Fig.5.

Fig.6.

European Patent Office

**EUROPEAN SEARCH REPORT**

Application number

EP 83 30 6107

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,X | GB-A-2 101 505 (STANDARD TELEPHONES AND CABLES LTD.) * Whole document * | 1-3 | G 02 B 5/16 |
| P,A | GB-A-2 105 483 (STANDARD TELEPHONES AND CABLES LTD.) | 1-3 | |
| A | GB-A-2 088 583 (BICC LTD.) | 1-3 | |
| A | GB-A-2 082 790 (SUMITOMO ELECTRIC IND. LTD.) | 1-3 | |

TECHNICAL FIELDS SEARCHED (Int. Cl. 3)

G 02 B
B 21 C

The present search report has been drawn up for all claims

| Place of search THE HAGUE | Date of completion of the search 24-01-1984 | Examiner THE K.H. |
|---|---|---|